# EUROPÄISCHE PATENTSCHRIFT

(11) **EP 1 749 443 B1**
(45) Veröffentlichungstag und Bekanntmachung des Hinweises auf die Patenterteilung: **10.04.2019**
(21) Anmeldenummer: 06015427.5
(22) Anmeldetag: 25.07.2006
(51) Int. Cl.: A01M 7/00, A01C 23/04

(54) **Landwirtschaftliches Spritzgerät**
Agricultural sprayer
Pulvérisateur agricole

(30) Priorität: 01.08.2005 DE 102005036603
(43) Veröffentlichungstag der Anmeldung: 07.02.2007
(73) Patentinhaber: Amazonen-Werke H. Dreyer GmbH & Co. KG, 49205 Hasbergen (DE)
(72) Erfinder: Ehlen, Volker, 49205 Hasbergen (DE); Marquering, Johannes, Dr., 49176 Borgloh (DE); Scheufler, Bernd, Dr., 49205 Hasbergen (DE)

(56) Entgegenhaltungen:
- EP-A1- 0 385 926
- FR-A1- 2 633 156
- US-A- 3 976 087

## Beschreibung

Die Erfindung betrifft ein landwirtschaftliches Spritzgerät gemäß des Oberbegriffes des Anspruches 1.

Ein derartiges landwirtschaftliches Spritzgerät ist durch die EP0 385 926 A1 bekannt.

Ein weiteres Spritzgerät ist beispielsweise durch die EP 03 47 421 1 bekannt. Bei diesem landwirtschaftlichen Spritzgerät wird in sog. Direkteinspeisung der Wirkstoff erst unmittelbar vor dem Ausbringen durch die Düsen in einer Mischkammer in die Trägerflüssigkeit eingebracht und somit wird erst vor dem unmittelbaren Ausbringen die Spritzflüssigkeit in der Spritzkammer angemischt. Es findet kein Anmischen der Spritzflüssigkeit im großen Umfang vor dem Ausbringen in dem Trank der Spritze statt, sondern es wird immer nur so viel Spritzflüssigkeit in der Mischkammer angemischt, wie auch tatsächlich ausgebracht wird. Im Rahmen derartiger Direkteinspeisungen ist es bisher nur möglich, in flüssiger Form vorliegende Wirkstoffe in die Trägerflüssigkeit über die Mischkammer einzuspeisen und einzumischen.

Im Artikel "Möglichkeiten und Grenzen·der Direkteinspeisung von Pflanzenschutzmitteln zur teilschlagsspezifischen Unkrautkontrolle" in der Zeitschrift für Pflanzenkrankheiten und Pflanzenschutz in dem Sonderheft XIX aus 2004 wird erwähnt, dass die Formulierungen der Wirkstoffe in Spritzpulver und Wasser dispigierbare Granulate für die Direkteinspreisung nicht geeignet sind. Es wird sogar die Aussage gemacht, dass das Vormischen der festen Herbizide mit Wasser und die anschließende Einspeisung insbesondere unter dem Gesichtspunkt des Anwenderschutzes unzweckmäßig sei. Außerdem gingen die Vorteile der Direkteinspeisung, wie verbleib der Pestizide im Originalbehälter unter Vermeidung von Restmengen durch ein Vormischen der Herbizide ebenfalls verloren.

Hier setzt nun die vorliegende Erfindung ein. Der Erfindung liegt daher die Aufgabe zugrunde, das Spritzgerätdahingehend weiterzubilden, dass auch Wirkstoffe, die nicht in flüssiger Form vorliegen, über eine Mischkammer in die Trägerflüssigkeit zur Herstellung eines Spritzmittels eingespeist werden können.

Diese Aufgabe wird erfindungemäß durch die kennzeichnenden Merkmale des Patentanspruches 1 gelöst. Infolge dieser Maßnahmen wird kontinuierlich beim Ausbringen des Spritzmittels Wirkstoff und Trägerflüssigkeit in die Anmischkammer eingespeist, so dass der in pulvriger oder granulierter Form vorliegende Wirkstoff aufgelöst und "in Lösung gebracht" wird. Der in der Anmischkammer "verflüssigte" Wirkstoff wird dann noch immer in konzentrierter Form in die Mischkammer eingespeist und der Trägerflüssigkeit zugemischt, so dass erst in der Mischkammer die auszubringende Spritzflüssigkeit hergestellt wird.

Somit sind in granulierter oder pulvriger Form vorliegende Wirkstoffe in der richtigen Konzentration aufzulösen und in flüssige Form zu bringen Um den verflüssigten Wirkstoff der Trägerflüssigkeit in dem richtigen Mischungsverhältnis beizumischen, so dass in der Mischkammer die Spritzflüssigkeit in der richtigen Konzentration gemischt wird, ist vorgesehen, dass in der Verbindungsleitung zwischen der Anmischkammer und der Mischkammer eine Förderpumpe oder ein einstellbares Ventil angeordnet ist.

Wenn mehrere in granulierter oder pulvriger Form vorliegende Wirkstoffe in einem Spritzvorgang ausgebracht werden sollen, ist vorgesehen, dass mehrere Anmischkammern vorhanden sind. Somit ist dann für jeden Werkstoff eine eigene Mischkammer vorgesehen. Auch ist es möglich zusätzlich Wirkstoffe in flüssiger Form auszubringen. Um dieses zu verwirklichen, ist vorgesehen, dass ein Behälter für einen in flüssiger Form vorliegenden Wirkstoff vorhanden ist, dass zwischen diesem Behälter und der Mischkammer eine Verbindungsleitung angeordnet ist.

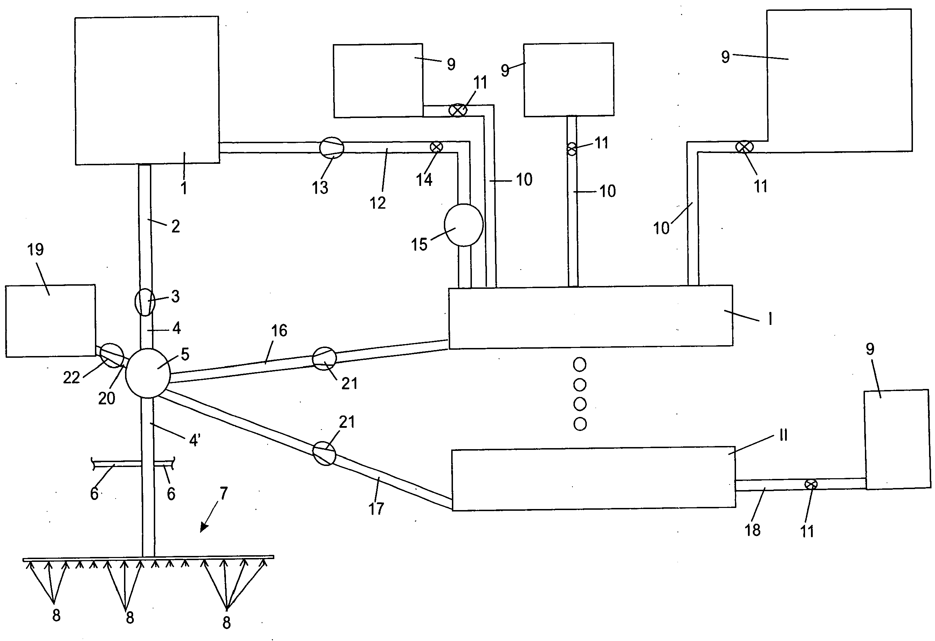

Weitere Einzelheiten der Erfindung sind der Beispielsbeschreibung und der Zeichnung zu entnehmen. Die Zeichnung zeigt
in schematischer Darstellung die Aggregate des Spritzgerätes.

Das als Feldspritze ausgebildete landwirtschaftliche Spritzgerät zum Spritzen von Spritzmitteln weist einen Vorratstank 1 auf, in dem sich die Trägerflüssigkeit, nämlich Wasser befindet. Von dem Vorratstank 1 führt eine Saugleitung 2 zu einer von einer Kraftquelle angetriebenen Pumpe 3, in deren Ausgangsleitung 4 eine nicht dargestellten Dosierarmatur angeordnet ist. Die Ausgangsleitung 4 führt zu einer Mischkammer 5. Die Ausgangsleitung 4' der Mischkammer 5 führt zu den einzelnen Teilbreiten 6 eines Auslegeraufbaus 7, an dem die einzelnen Düsen 8 zum Verteilen der Spritzflüssigkeit auf der Pflanzen- oder Bodenoberfläche angeordnet sind. Weiterhin weist das Spritzgerät zumindest einen Behälter 9 für mindestens einen Wirkstoff auf. Dieser Wirkstoff kann z.B. Düngemittel, Insekten- oder Krankheitseindämmungsmittels oder ein Unkrautvernichtungsmittel in konzentrierter Form sein. Im Ausführungsbeispiel sind der Anmischkammer I drei Behälter 9 für unterschiedliche Wirkstoffe zugeordnet. Die Wirkstoffe liegen in pulvriger oder granulierter Form vor. Jeder Behälter 9 ist über eine Verbindungsleitung 10, in der ein einstellbares Dosierorgan 11, beispielsweise eine von einer Kraftquelle angetrieben Dosierwalze angeordnet ist, mit der Anmischkammer I verbunden. Weiterhin ist zwischen der Anmischkammer I und dem Vorratstank 1, in dem sich die aus Wasser bestehende Trägerflüssigkeit befindet, die Versorgungsleitung 12 angeordnet. In der Versorgungsleitung 12 ist die Dosierpumpe 13, das einstellbare Ventil 14 sowie der Durchflussmesser 15 angeordnet. Von der Anmischkammer I führt eine Verbindungsleitung 16 zu der Mischkammer 5. Es können auch, wie dargestellt, weitere Anmischkammern, wie z.B. die Anmischkammer II vorhanden sein, der ebenfalls über eine Verbindungsleitung 17 ein oder mehrere Behälter 9, in dem ein Wirkstoff in granulierter oder pulvriger Form eingefüllt werden kann, zugeordnet ist, vorhanden sein. Zwischen der Anmischkammer II und der Mischkammer 5 ist dann ebenfalls eine Verbindungsleitung 18 angeordnet. Des Weiteren kann der Mischkammer 5 auch zumindest ein Behälter 19 über eine Verbindungsleitung 20 zugeordnet sein, in dem ein in flüssiger Form vorliegender Wirkstoff eingefüllt ist. Auch dieser flüssige Wirkstoff kann der Mischkammer 5 zugeführt werden.

Je nach auszubringender Menge wird über die Pumpe 13 aus dem Vorratstank 1 die Trägerflüssigkeit Wasser in die Anmischkammer I fortlaufend eindosiert und gleichzeitig wird der in granulierter oder pulvriger Form vorliegende Wirkstoff, je nach dem welcher Wirkstoff ausgebracht werden soll, ebenfalls in die Anmischkammer I geleitet. In der Anmischkammer wird durch die eingeleitete Trägerflüssigkeit, nämlich Wasser das in pulvriger oder granulierter Form vorliegende Dosiermittel aufgelöst, also "in Lösung gebracht". Der dann noch in relativ hoher Konzentration vorliegende aufgelöste Wirkstoff wird dann über die Verbindungsleitung 16 aus der Anmischkammer I in die Mischkammer 5 geleitet und der Trägerflüssigkeit zudosiert. In der Mischkammer 5 wird dann der Wirkstoff mit der Trägerflüssigkeit, nämlich Wasser, in der richtigen Konzentration zu der Spritzflüssigkeit verdünnt. Über die Leitungen 4' wird dann in bekannter und nicht näher dargestellter Weise die Spritzflüssigkeit den einzelnen Teilbreiten 6' des Auslegeraufbaus 7 zugeleitet und über die Düsen 8 ausgebracht. Die einzelnen Teilbreiten 6 lassen sich in bekannter und daher nicht näher dargestellter Weise über die einzelnen nicht dargestellten Teilbreitenventile zu- oder abschalten. Die einzelnen Dosierpumpen 3, 11, 13, 21, 22 , die den Verbindungsleitungen 10, 12, 16, 20 und der Zuführleitung 2, zugeordnet sind, werden über eine elektronische Regeleinrichtung entsprechend so eingestellt, dass das Spritzmittel in der gewünschten Konzentration über die Düsen 8 auf der Bodenoberfläche ausgebracht wird.

Die Funktionsweise des Spritzgerätes 7 ist folgende:
Je nach dem über welche Teilbreite 6 des Feldspritzesaufbaus 7 über die Düsen 8 in entsprechend vorgegebener Menge das Spritzmittel ausgebracht werden soll, wird über die Pumpe 3 Trägerflüssigkeit der Mischkammer 5 zugeleitet. Gleichzeitig wird über die Pumpe 3 Trägerflüssigkeit in die Anmischkammer I, II zum Auflösen des in pulvriger oder granulierter Form vorliegenden Wirkstoffes eingeleitet. Gleichzeitig wird aus den Behältern 9 über die Dosierorgane 11, 21 der Wirkstoff in die Anmischkammer I, II eingeleitet. In dem fortlaufenden, Prozess wird in die Anmischkammer I, II der in pulvriger oder granulierter Form vorliegende Wirkstoff aufgelöst und "in Lösung gebracht" und über die in der Verbindungsleitung 16, 17 angeordnete Pumpe 21 von der Anmischkammer I, II in der Mischkammer 5 der Trägerflüssigkeit beigemischt bzw. eingemischt, so dass in der Mischkammer 5 die Spritzflüssigkeit in der richtigen Konzentration entsteht, welche über die Leitungen 4' den einzelnen Teilbreiten 6 und somit den Düsen 8 des Auslegeraufbaus 7 zugeleitet wird. Je nach dem wie groß die Menge Spritzflüssigkeit ist, die pro Flächeneinheit oder zurückgelegtem Weg auszubringen ist, wird auch über die Pumpe 13 entsprechend Trägerflüssigkeit in die Anmischkammer I, II und über die Dosierorgane 11 entsprechend Wirkstoff in die Anmischkammer I, II eingeleitet, so dass immer nur so viel Wirkstoff aufgelöst bzw. "in Lösung gebracht" wird, wie auch tatsächlich erforderlich ist, um über die Mischkammer 5 in die Trägerflüssigkeit zur Schaffung der Spritzflüssigkeit zu dosieren.

## Patentansprüche

1. Landwirtschaftliches Spritzgerät zum Spritzen von Spritzmitteln in der Form einer Trägerflüssigkeit, z.B. Wasser, die mit mindestens einem Wirkstoff vermischt wird, dabei weist das landwirtschaftliche Spritzgerät folgende Elemente auf:
- einen Behälter (1) zum Aufnehmen der Trägerflüssigkeit,
- mindestens einen Behälter (9) zum Aufnehmen eines Wirkstoffs, wie z.B. Düngemittel, ein Insekten- oder Krankheitseindämmungsmittel oder ein Unkrautvernichtungsmittel, in konzentrierter Form,
- eine Mischkammer (5) zum Mischen der Trägerflüssigkeit mit zumindest einem Wirkstoff, um das Spritzmittel bereitzustellen,
- Verbindungsleitungen (16, 17) zum Einspeisen des jeweiligen Wirkstoffs in die Mischkammer (5) und Verbindungsleitungen (12) zum Einspeisen der Trägerflüssigkeit in die Mischkammer (5),
- einen Auslegeraufbau (7), der zumindest eine Düse (8) hat und mit der Mischkammer (5) verbunden ist, um den Wirkstoff gemischt mit der Trägerflüssigkeit auszustoßen,
**dadurch gekennzeichnet, dass**
zumindest eine Anmischkammer (I,II) zum Anmischen und/oder Überführen des in granulierter oder pulvriger Form vorliegenden Wirkstoff in eine flüssige Form vorhanden ist, dass die Anmischkammer (I,II) über eine Verbindungsleitung (12) mit dem Behälter (1) zum Aufnehmen der Trägerflüssigkeit verbunden ist, dass die Anmischkammer (I,II) über zumindest eine weitere Verbindungsleitung (10,18) mit zumindest einem Behälter (9) mit Wirkstoff verbunden ist, dass in der von dem Behälter (1) mit der Trägerflüssigkeit zu der Anmischkammer (I, II) führenden Leitung ein regelbares Dosierorgan (11) angeordnet ist, dass die Anmischkammer (I,II) über eine Verbindungsleitung (16,17) mit der Mischkammer (5) verbunden ist, die erforderliche Menge Spritzflüssigkeit, die pro Flächeneinheit oder zurückgelegtem Weg auszubringen ist, über eine von einer elektronischen Regeleinrichtung einzustellenden Pumpe (13) entsprechend Trägerflüssigkeit in die Anmischkammer (I, II) und über die von einer elektronischen Regeleinrichtung einzustellenden Dosierorgane (11) entsprechend Wirkstoff in die Anmischkammer (I, II) einleitbar ist, so dass immer nur so viel Wirkstoff aufgelöst bzw. in Lösung gebracht wird, wie auch tatsächlich erforderlich ist, um über die Mischkammer (5) in die Trägerflüssigkeit zur Schaffung der Spritzflüssigkeit zu dosieren.

2. Spritzgerät nach Anspruch 1, **dadurch gekennzeichnet, dass** in der Verbindungsleitung·(16, 17) zwischen der Anmischkammer und der Mischkammer (5) eine Förderpumpe (21) oder ein einstellbaresVentil angeordnet ist.

3. Spritzgerät nach einem oder mehreren der vorstehenden Ansprüche, **dadurch gekennzeichnet, dass** mehrere Anmischkammern (I,II) vorhanden sind.

4. Spritzgerät nach einem oder mehreren der vorstehenden Ansprüche, **dadurch gekennzeichnet, dass** ein Behälter (19) für einen in flüssiger Form vorliegenden Wirkstoff vorhanden ist, dass zwischen diesem Behälter (19) und der Mischkammer (5) eine Verbindungsleitung (20) angeordnet ist.

## Claims

1. Agricultural sprayer for spraying spraying agent in the form of a carrier liquid, for example water, which is mixed with at least one active substance, the agricultural sprayer having in this case the following elements:
- a container (1) for receiving the carrier liquid,
- at least one container (9) for receiving an active substance, such as for example fertilizer, an insect or disease control agent or a weedkiller, in concentrated form,
- a mixing chamber (5) for mixing the carrier liquid with at least one active substance in order to provide the spraying agent,
- connection lines (16, 17) for feeding the respective active substance into the mixing chamber (5), and connection lines (12) for feeding the carrier liquid into the mixing chamber (5),
- a boom construction (7) which has at least one nozzle (8), and which is connected to the mixing chamber (5), in order to discharge the active substance mixed with the carrier liquid,
**characterized in that**
at least one blending chamber (I, II) for blending and/or converting the active substance, which is present in granulated or powdery form, to a liquid form is present, **in that** the blending chamber (I, II) is connected via a connection line (12) to the container (1) for receiving the carrier liquid, **in that** the blending chamber (I, II) is connected via at least one further connection line (10, 18) to at least one container (9) having active substance, **in that** a regulable dosing member (11) is arranged in the line which leads from the container (1) having the carrier liquid to the blending chamber (I, II), **in that** the blending chamber (I, II) is connected via a connection line (16, 17) to the mixing chamber (5), the required quantity of spraying liquid, which is to be applied per unit area or distance travelled, carrier liquid is able to be introduced into the blending chamber (I, II) correspondingly via a pump (13) to be set by an electronic regulating device, and active substance is able to be introduced into the blending chamber (I, II) correspondingly via the dosing members (11) to be set by an electronic regulating device, such that at all times only as much active substance is dissolved or brought into solution as is actually required in order to dose via the mixing chamber (5) into the carrier liquid for the purpose of providing the spraying liquid.

2. Sprayer according to Claim 1, **characterized in that** a feed pump (21) or a settable valve is arranged in the connection line (16, 17) between the blending chamber and the mixing chamber (5).

3. Sprayer according to one or more of the preceding claims, **characterized in that** multiple blending chambers (I, II) are present.

4. Sprayer according to one or more of the preceding claims, **characterized in that** a container (19) for an active substance which is present in liquid form is present, and **in that** a connection line (20) is arranged between said container (19) and the mixing chamber (5).

## Revendications

1. Pulvérisateur agricole pour la pulvérisation d'agents à pulvériser sous la forme d'un liquide porteur, par exemple d'eau, qui est mélangé avec au moins une substance active, le pulvérisateur agricole présentant en l'occurrence les éléments suivants:
- un réservoir (1) destiné à contenir le liquide porteur,
- au moins un réservoir (9) destiné à contenir une substance active, comme par exemple un engrais, un agent de protection contre les insectes ou les maladies ou un agent désherbant, sous forme concentrée,
- une chambre de mélange (5) pour mélanger le liquide porteur avec au moins une substance active, afin de préparer l'agent à pulvériser,
- des conduites de raccordement (16, 17) pour amener la substance active respective dans la chambre de mélange (5) et des conduites de raccordement (12) pour amener le liquide porteur dans la chambre de mélange (5),
- une structure de rampe (7), qui comporte au moins une buse (8) et qui est raccordée à la chambre de mélange (5), pour éjecter la substance active en mélange avec le liquide porteur,
**caractérisé en ce qu'**il se trouve au moins une chambre de pré-mélange (I, II) pour pré-mélanger et/ou amener la substance active se trouvant sous forme granulaire ou pulvérulente à une forme liquide, **en ce que** la chambre de pré-mélange (I, II) est raccordée par une conduite de raccordement (12) au réservoir (1) destiné à contenir le liquide porteur, **en ce que** la chambre de pré-mélange (I, II) est raccordée par au moins une autre conduite de raccordement (10, 18) audit au moins un réservoir (9) contenant une substance active, **en ce qu'**un organe de dosage réglable (11) est disposé dans la conduite menant du réservoir (1) contenant le liquide porteur à la chambre de pré-mélange (I, II), **en ce que** la chambre de pré-mélange (I, II) est raccordée par une conduite de raccordement (16, 17) à la chambre de mélange (5), la quantité nécessaire de liquide à pulvériser, qui doit être appliquée par unité de surface ou selon le chemin parcouru, du liquide porteur peut être introduite dans la chambre de pré-mélange (I, II) de manière correspondante par une pompe (13) à régler au moyen d'un dispositif de réglage électronique et de la substance active peut être introduite dans la chambre de pré-mélange (I, II) de manière correspondante par les organes de dosage (11) à régler au moyen d'un dispositif de réglage électroniques, de telle manière que seule la quantité de substance active qui est effectivement nécessaire soit toujours dissoute ou mise en solution, afin de la doser par la chambre de mélange (5) dans le liquide porteur pour produire le liquide à pulvériser.

2. Pulvérisateur selon la revendication 1, **caractérisé en ce qu'**une pompe d'alimentation (21) ou une soupape réglable est disposée dans la conduite de raccordement (16, 17) entre la chambre de pré-mélange et la chambre de mélange (5).

3. Pulvérisateur selon une ou plusieurs des revendications précédentes, **caractérisé en ce qu'**il se trouve plusieurs chambres de pré-mélange (I, II).

4. Pulvérisateur selon une ou plusieurs des revendications précédentes, **caractérisé en ce qu'**il se trouve un réservoir (19) pour une substance active se présentant sous forme liquide, et **en ce qu'**une conduite de raccordement (20) est disposée entre ce réservoir (19) et la chambre de mélange (5).
